# EUROPEAN PATENT APPLICATION

(11) **EP 3 251 567 A1**
(43) Date of publication of application: **06.12.2017**
(21) Application number: 17172547.6
(22) Date of filing: 23.05.2017
(51) Int. Cl.: A47J 43/07, B01F 7/00

(54) **IMPROVEMENTS RELATING TO FOOD BLENDERS**

(30) Priority: 23.05.2016 GB 201609041
(71) Applicant: Kenwood Limited, Havant, Hampshire PO9 2NH (GB)
(72) Inventor: PALMER, Paul, Havant, Hampshire PO9 2NH (GB); GRUNDY, Gilman, Havant, Hampshire PO9 2NH (GB); CUNNINGHAM, Bradley, Havant, Hampshire PO9 2NH (GB)
(74) Representative: Hector, Annabel Mary

(57) **Abstract**

A food blender 1 having a container 2 into which food may be placed, and a cutting or mixing blade 3 adjacent the bottom of the container normally rotated about an axis X by a rotating drive 5, said blade being connected to the rotating drive though a resilient flexible member 10 allowing the blade to flex away from rotation about the axis to achieve a required processing result.

## Description

The present invention relates to kitchen appliances such as food blenders. More specifically, the present invention relates to tool arrangements and control mechanisms for tool arrangements for food processing devices for use in the home, including blenders.

It is known to provide a kitchen appliance such as a food processor or blender in which a container is provided into which food is placed, and a cutting/mixing blade (or other rotary tool) adjacent the bottom of the container is rotated. The container is often tapers inwardly towards the blade. In use food to be blended or otherwise processed is placed in the container, and the blade rotated. The blade normally has three or four arms radiating from a rotating shaft, with each arm supporting cutting edges.

As the blade rotates, food is cut and mixed by the blade with cut blended food forced outwards by the blade towards the container walls. If a solid object such as ice is placed into a food processor such as a blender, this can create an impact on the blade which can either damage the blade or blunt the cutting edges. Also ice can be pushed to the top of the container.

Also if large lumps of food such as a lemon are placed between the blade and the side wall of the container this can cause a bending force on the rotating shaft which can lead to damage of shaft bearings or the shaft, and also damage to the blade. This can also slow down the blending/processing process.

Also, lumps of food may co-rotate with the blades without being processed, or be processed unevenly. This can occur especially where a standing vortex forms. This results in inefficient and unsatisfactory processing.

An additional issue is that different food processing activities require rotary tools of different pitch, tilt, and sweep. For example, high-speed (e.g., 35,000 RPM) food processing by rotary blade tools requires blades that are relatively stream-lined (e.g., edge-on, low angle-of-attack) in the direction of rotation so as to avoid excessive axial force acting on the blades that may break them. In contrast, relatively slow food (circa 100RPM or less) processing activities often require blades which present broad faces (e.g., 3 times the thickness of the blade or more, high angle-of-attack) in the direction of rotation to ensure that the food is moved axially relative to the blade for processing.

It is therefore desirable to provide a tool arrangement for a food processing device capable of addressing the above concerns and enabling efficient and satisfactory processing.

According to one aspect of the invention, there is provided a variable-geometry tool assembly for a kitchen appliance, comprising a rotary tool with at least one tool element and an axle from which the tool derives rotary drive, and at least one of the rotary tool, the tool element, and the axle comprising a variable geometry configuration, and a control element arranged to act upon the variable geometry configuration to constrain the variable geometry. Thus the geometry of the tool assembly may be varied to achieve a desired processing result.

In one example, the axle comprises a flexing member, and the control element comprises a resilient element configured to bias the flexing element towards the axis of rotation. Thus the tool is able to flex away from the axis of rotation to avoid forceful collisions with the item being processed.

The resilient element may for example be in the form of a helical spring surrounding the flexing member.

The control element may further comprise an actuator for selectively either constraining the flexing member to rotate about the axis of rotation or permitting and/or driving flexing of flexing member away from the axis of rotation, The actuator may comprise a rigid element slidable axially along the flexing member to selectively constrain at least a portion of the flexing member.

For example the actuator can comprise a jacket arranged to surround the flexing element, or a rod arranged to slide axially in an internal cavity of the flexing member.

The actuator can alternatively comprise one or more inflatable element(s) located in an internal cavity defined axially through the flexing member, the inflatable element(s) being selectively inflatable and deflatable.

Optionally the actuator comprises at least one member formed of a smart material controllable to either permit, constrain, or drive flexing of the flexible member away from the axis of rotation. The smart material may comprise at least one of an electro-active shape-memory alloy or an electro-active shape-memory polymer, which can retain their original shapes even when subjected to external stresses. The flexing member can for example comprise at least one of silicone, rubber, a helical spring, an articulated joint, a universal joint, or a ball-joint.

Preferably, at least one of the tilt, sweep, and pitch of the at least one tool element is variable relative to an axis of rotation of the axle, and the control element comprises at least one mechanical actuator. The tool assembly can further comprise a drive arranged to communicate with the rotary tool and/or the at least one tool element to drive the mechanical actuator, the drive element being in mechanical communication with a rotating element co-rotating with the axle. The tool element can therefore be adapted to a certain food to be processed.

The rotating element can be in the form of a rotating swashplate, with the drive element comprising a non-rotating swashplate.

According to another aspect of the invention, there is provided a kitchen appliance comprising the above-described tool assembly. The kitchen appliance may comprise a control system for controlling the tool assembly, the control system comprising a processor arranged to receive information, and to operate the control element to act upon the variable geometry configuration in response to the information. The control system can comprise at least one sensor arranged to sense a physical characteristic of at least one of a working medium and the tool assembly, and wherein the processor is arranged to operate the control element in response to information from the at least one sensor. Thus the appliance can respond to stimuli, and adjust the control element if required.

The appliance may comprise a user interface, wherein the processor is arranged to operate the control element in response to information received from the user interface. The appliance may also communicate information to an external data source. In this embodiment, the processor is in electronic communication with the external data source and is arranged to receive instructions from the external data source for operating the control element. The appliance can therefore be more easily controlled, either through direct use of the interface, or through remote access.

The appliance can further comprise a data store arranged to contain information relating to characteristics of working media. The appliance can then adjust one or more settings to accommodate the food which is to be processed, thereby potentially increasing efficiency or reducing the likelihood of damage to any of the components.

In another embodiment, there is provided a control system for controlling a kitchen appliance comprising: a processor, a rotary tool arranged to act upon a working medium by bodily movement of the tool relative to the medium, the tool having a selectively variable geometry, at least one sensor arranged to sense a physical characteristic of at least one of a working medium and the rotary tool, wherein the processor is configured to; generate instructions for at least one of causing bodily movement of the rotary tool relative to the working medium, or controlling the variation of the geometry of the rotary tool, based on feedback from the at least one sensor, and cause the instructions to be executed by the kitchen appliance.

The control system can also controlling the variation of the geometry of the tool comprises causing variation of the geometry, allowing variation of the geometry, or preventing variation of the geometry of the tool, and the processor can be a remote processor in electronic communication with the kitchen appliance. Alternatively the processor can be a mobile-device processor in electronic communication with the kitchen appliance. The processor may also be integral to the appliance.

The invention also provides a method for controlling a rotary tool assembly for a kitchen appliance, comprising steps of:
a. sensing a sensed physical characteristic of at least one of a working medium and a rotary tool performing processing on the working medium
b. automatically performing at least one of
   i. bodily moving the rotary tool, and,
   ii. controlling variation of the geometry of the rotary tool,
   based on the physical characteristic.

The method may further comprise the steps of:
c. receiving a desired physical characteristic;
d. checking whether the sensed physical characteristic matches the desired physical characteristic and outputting a checking result;
e. automatically performing at least one of:
   i. bodily moving the rotary tool
   ii. varying or controlling variation of the geometry of the rotary tool based on the checking result.

Thus for example the method may comprise automatically performing varying or control variation of the geometry of the rotary tool.

The varying or controlling variation of the geometry of the rotary tool may comprise inserting/removing a rod into or from an internal cavity of a flexible element of the rotary tool so as to permit or prevent its flexing.

Alternatively, the varying or controlling variation of the geometry of the rotary tool may also comprise applying a stimulus to a smart material so as to permit, prevent, or drive flexing of a flexible element, or inflating or deflating an inflatable element located in an internal cavity of a flexible element. Sliding a jacket along a flexible element of the rotary tool so as to permit or prevent flexing of the flexible element may also be used.

Any apparatus feature as described herein may also be provided as a method feature, and vice versa. As used herein, means plus function features may be expressed alternatively in terms of their corresponding structure, such as a suitably programmed processor and associated memory.

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein.

The invention also provides a signal embodying a computer program for carrying out any of the methods described herein and/or for embodying any of the apparatus features described herein (e.g., as a file for use with a 3D printer to construct the apparatus and apparatus elements herein described), a method of transmitting such a signal, and a computer product having an operating system which supports a computer program for carrying out any of the methods described herein and/or for embodying any of the apparatus features described herein.

The invention also encompasses a kit of parts for constructing any of the apparatuses or apparatus elements herein described.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

In this specification the word 'or' can be interpreted in the exclusive or inclusive sense unless stated otherwise.

Furthermore, features implemented in hardware may generally be implemented in software, and vice versa. Any reference to software and hardware features herein should be construed accordingly.

These and other aspects of the present invention will become apparent from the following exemplary embodiments of the invention that are described with reference to the accompanying drawings in which:
Figure 1 shows a perspective view of a food blender;
Figure 2 shows a perspective view of a flexing member;
Figure 3 shows a cross-section of a flexing member having controlled flexibility;
Figure 4 shows a cross-section of another flexing member having controlled flexibility;
Figure 5 is a schematic diagram demonstrating operation of a further flexing member having controlled flexibility;
Figure 6 is a schematic diagram demonstrating operation of a tool arrangement having variable pitch;
Figure 7 is a schematic diagram demonstrating operation of a tool arrangement having variable tilt;
Figure 8 is a schematic diagram demonstrating operation of a further tool arrangement having variable tilt;
Figure 9 is a conceptual diagram showing communication between elements of a control system;
Figure 10a is a top-down schematic diagram demonstrating elements of a control system; and
Figure 10b is a cut-away schematic diagram demonstrating operation of a control system.

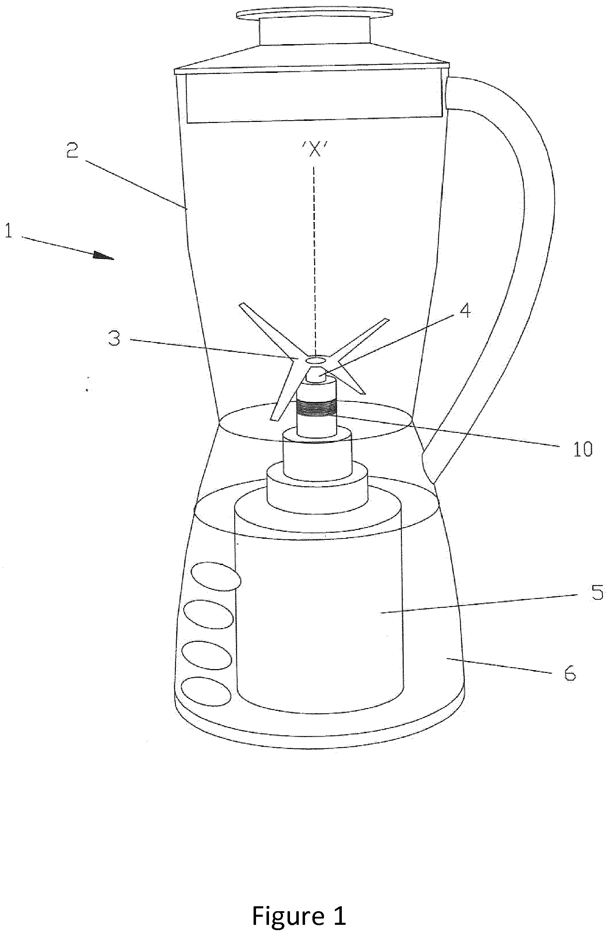

Referring to Figure 1 there is shown a food blender 1. Blender 1 has a container 2 into which food is placed. A cutting/mixing blade 3 is provided adjacent the bottom of the container on a shaft 4 rotated about an axis X by a rotating member in the form of a motor 5 in a housing 6 separable from container 2. Shaft 4 is connected to the motor 5 by a flexing member 10. Motor 5 may be a reversible motor such as a synchronous-reluctance motor.

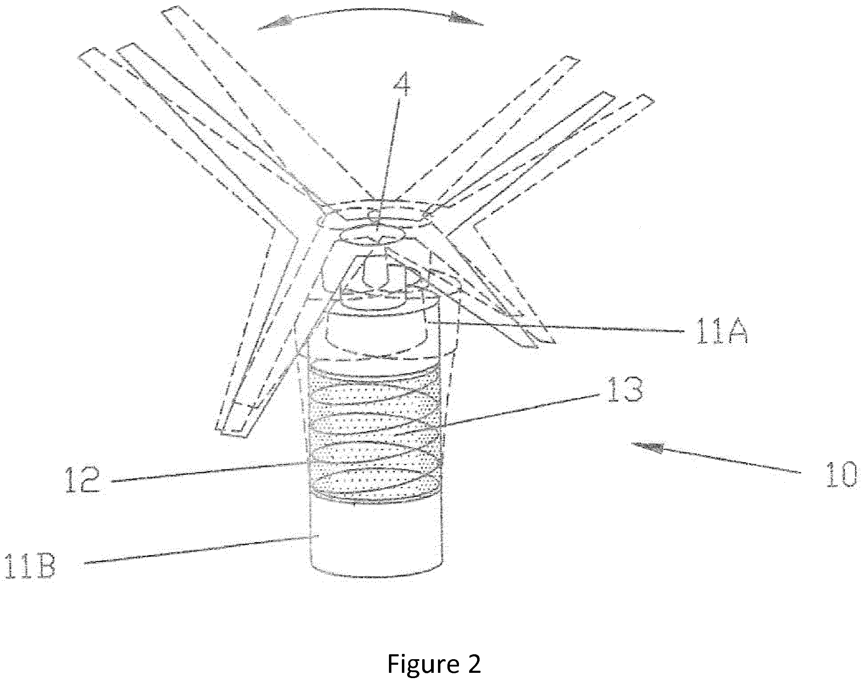

As shown in Figure 2, flexing member 10 is formed from a pair of circular plates 11 A, 11 B at either end of an helical spring 12 around a flexible core of silicone 13. Plate 11 A is connected to shaft 4 supporting blade 3, and plate 11 B is connected to motor 5 for rotation by motor 5. As shown by the dotted lines, flexing member 10 allows the shaft and hence the blade to flex away from the axis X, and said flexing member with its spring 12 normally biasing the shaft towards said axis. Silicone core 13 helps dampen movement of spring 12, and spring 12 helps control flexing by biasing the shaft towards the axis of rotation and limiting the degree to which it can flex.

Whilst a silicone core 13 is used to permit flexing of the flexing member 10, other flexible elements may be used in its place, including an articulated joint, a universal joint, or a ball-joint constrained to rotate with the shaft 4. Rubber or other flexible substances dampening materials may also be used in place of silicone. Where the helical spring 12 is sufficiently stiff that no damping is required, the silicone core 13 may be omitted. Whilst the helical spring 12 is used to control flexing of the flexing member 10, other resilient elements (e.g., an elasticated sleeve) may also be used.

In use, if any solid food items are hit by the blade 3, the flexing member 10 will allow flexing of the shaft 4 so reducing the impact forces on blade 3.

Also if large lumps of food are placed between the blade and the side wall of the container the shaft 4 can flex reducing damage of shaft bearings or the shaft, and also damage to the blade.

If a lump is encountered by blade 3, not only is it cut, but the shaft 4 will flex to draw more lumps towards the blade 3. The flexing of shaft 4 ensures a smooth blend with the shortest possible time. It also ensures a smooth blend of fruits and ice as it ensures ice does not stay towards the top of the container.

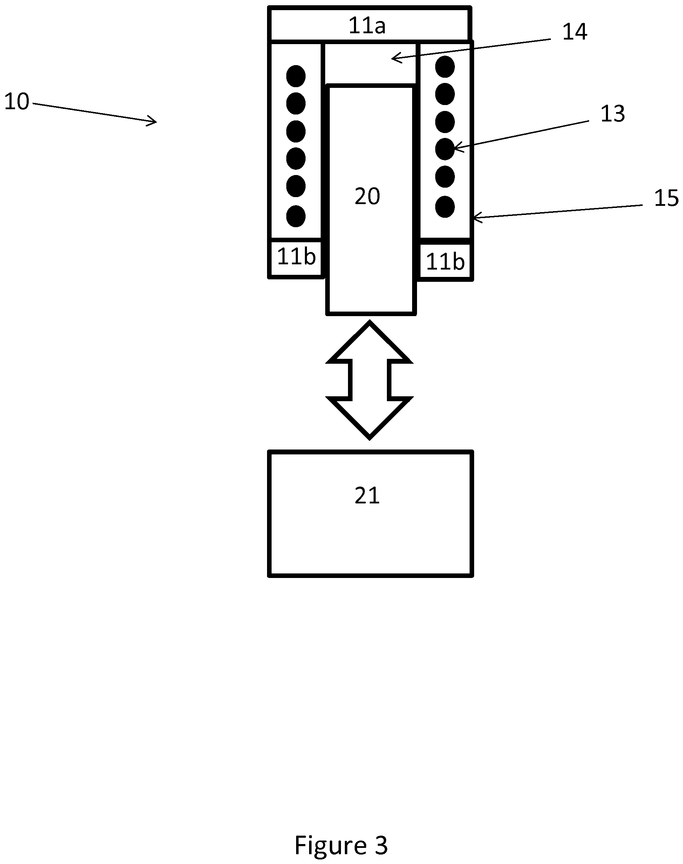

It is desirable to provide a shaft with variable flexibility, so that the shaft may selectively be rendered more or less flexible depending on the desired food processing result. One way of achieving this, shown in Fig. 3 (in which the blades are omitted for simplicity's sake), is to replace the silicone core 13 with a rod 20 made of a material that is less flexible than the helical spring 12, such as steel or a hard plastic . This rod 20 is then selectively inserted into or withdrawn from the helical spring 12 through a hole in plate 11 B, either partially or wholly, to vary the flexibility of the flexing member 10 as a whole, by a mechanical actuator 21. Mechanical actuator 21 can be a solenoid, linear actuator, electric motor, hydraulic or pneumatic piston, or manual mechanism (e.g., a hand-turned screw).

With the rod 20 inserted so as to fill the entirety of the central cavity 14 of the helical spring 13, the helical spring 12 cannot flex so as to move radially and the flexing member 10 is rigid. Conversely when the rod 20 is partially removed the top end of the flexing member 10 is free to flex. Completely removing the rod 20 allows the entirety of the flexing member 10 to flex. The rod 20 may either co-rotate with the flexing member 10, or be constrained so as not to rotate. The above-described advantages of a flexible axle/shaft are thus combined with the advantages of a shaft that may be rendered rigid for, e.g., processing of tough material such as meat or fibrous vegetables.

The helical spring 13 may be covered by a smooth jacket 15 to facilitate sliding of the rod 20 within the central cavity 14 formed of or coated with a relatively slippery/smooth material such as Teflon™. Alternatively or in addition to this the central cavity may contain a lubricant such as oil.

In an alternative to the above, the rod 21 can instead be a flexible bag that is inflated by filling it either with a gas or a liquid, thus rendering the flexing member 10 either partially or wholly rigid. The flexing member 10 may then be rendered flexible by removing the gas/liquid. This bag may be segmented circumferentially (i.e., into pie-shaped segments) and/or axially so as to allow flexing along only part of the axial length of the flexing member 10, or flexing only (or being driven to flex) in a desired radial direction through the selective inflation of segments to process material in that direction.

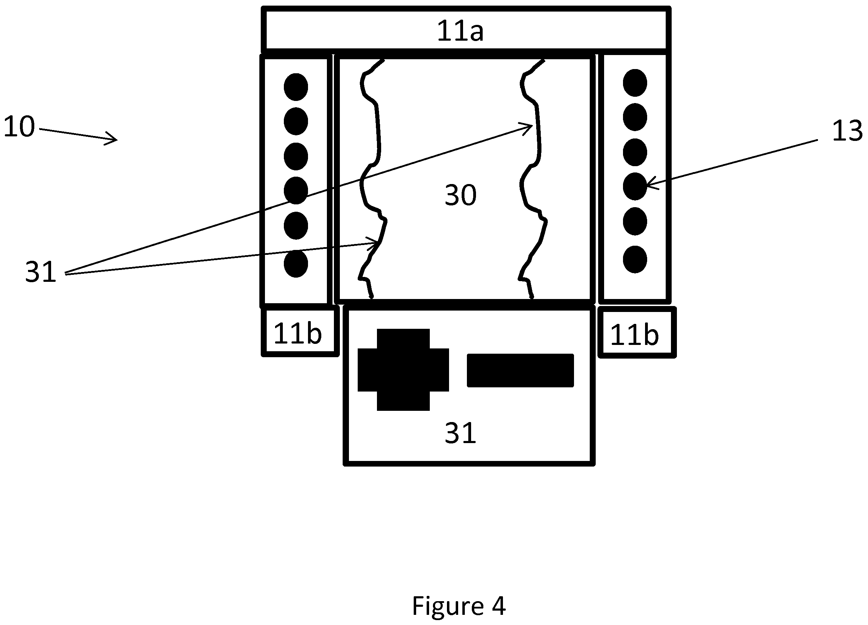

Another way of achieving a tool arrangement with variable flexibility is, as shown in Fig. 4, to replace the silicone core 13 with a core 30 containing so-called "smart materials" which vary their physical properties based on heat, electrical, and other conditions.

One example of such a "smart material" is MuscleWire™, a shape-memory alloy that contracts when an electric current is applied to it by power-source 31. Applying electrical current to a core 30 made of an ordinarily-flexible substance (e.g., rubber) incorporating MuscleWire™ strands 32 embedded along the length of the core 30 would cause the MuscleWire™ strands 32 to contract, rendering the core 30 rigid. To cause the core 30 to bend in a desired direction, rather than applying electrical current to all the MuscleWire™ strands 32 simultaneously, power-source 31 instead applies current to those strands 32 on the side in the direction in which bending is desired to occur. In this fashion selective activation of smart materials may be used to push/drive the axle to bend in a desired direction, or selectively allow/prevent flexing of the core 30.

Whilst MuscleWire™ is used here as an example, other suitable smart materials may be used, such as, for example, other electro-active shape-memory alloys or electro-active shape-memory polymers which either contract, expand, or stiffen in response to electrical stimulus (or its absence). Similarly, whilst electrical stimuli are used here, other stimuli such as chemical, heat, sound, light etc. in combination with smart materials responding to these stimuli may be used to vary flexibility. Whilst the strands 32 are shown as extending axially, they may instead extend radially or about the circumference of the core 30. Indeed, the core 30 may consist entirely of such smart materials, either segmented so as to allow partial stimulation of the core 30 or single-piece.

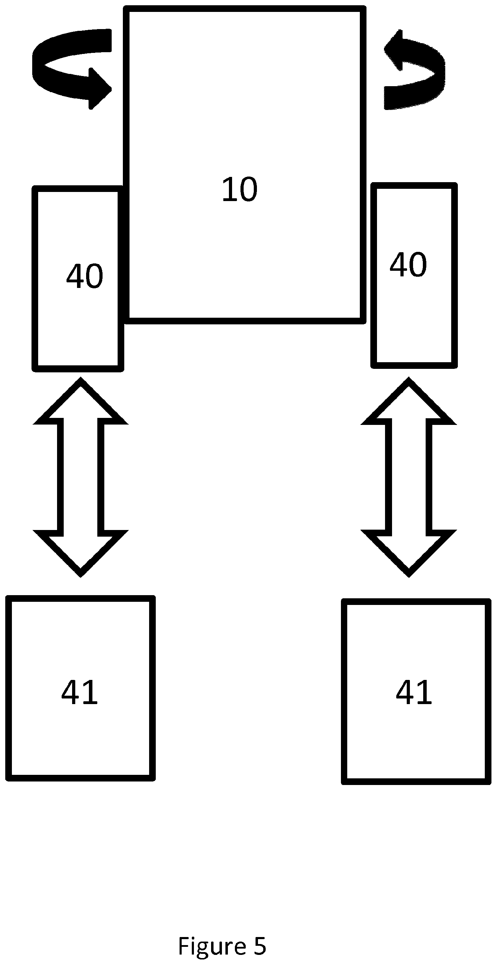

In an alternative way of achieving a tool arrangement with variable flexibility shown in Fig. 5, a axially-sliding jacket or sleeve 40 surrounds the flexing member 10. The sliding jacket 40 is slid upwardly to restrict (either partially or wholly) the flexing member 10 by a mechanical actuator 41 similar to the mechanical actuator 21. Lowering the sliding jacket 41 so as to uncover (either partially or wholly) the flexing member 10 allows the flexing member 10 to flex freely. To permit the flexing member 10 to flex in a desired direction but remain restricted in other directions, the sleeve 40 may be segmented into two or more circumferential segments which may be individually raised or lowered by individual mechanical actuators to cover one or more sides of the flexing member 10 (thus preventing flexing towards these sides) whilst leaving one or more other sides uncovered (thus permitting flexing in these directions). The sliding jacket 40 may either co-rotate with the flexing member 10, or be constrained so as not to rotate. The exterior of the flexing member 10 may be formed of or coated with a slippery material such as Teflon™ and/or coated with a lubricant such as oil to facilitate movement of the sliding jacket 40 and prevent wear.

It is further desired to provide rotary tools with variable pitch so as to dynamically provide different angles-of-attack between the tools (e.g., blades) and the food being processed depending on rotational speed and/or desired food processing result so as to control forces applied to the blades and working-matter along the axis of rotation of the tool.

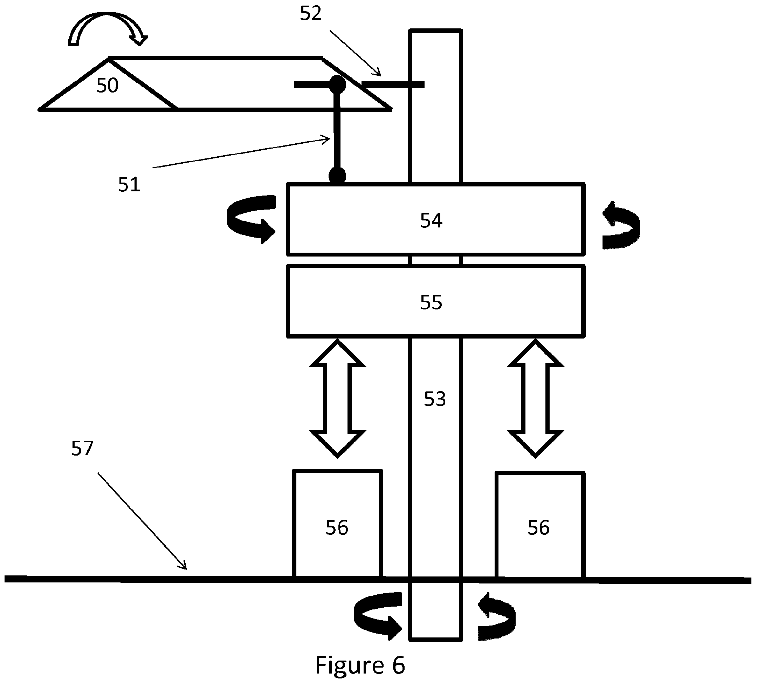

A way of providing varied tool-pitch is shown in Fig. 6. Fig. 6 shows a blade 50 hingedly connected to a pitch control rod 51 and pivoting about a pivot 52 connected to a rotating shaft 53. The pivot control rod 51 is hingedly connected to rotating swashplate 54 (an annular disk with a central aperture through which the shaft 53 extends, in this case constrained to rotate with the rotating shaft 53, and which may be connected to the rotating shaft 53 by a ball-joint) which contacts non-rotating swashplate 55 (a disk similar to swashplate 54, except constrained so as not to rotate). Non-rotating swashplate 55 can be selectively raised and lowered by mechanical actuators 56 arrayed about its circumference (e.g., in a fashion similar to a Stewart Platform) and supported on base 57, thus pushing rotating swashplate 54 upwardly and downwardly, thus driving pitch control rod 51 to pivot blade 50 about pivot 52 to a desired angle-of-attack.

Whilst one pitch-controlled blade 50 is shown here for exemplary purposes, two or more such blades 50 may be connected by respective control rods 51 to the same rotating swashplate 54. Mechanical actuators 57 may cause the non-rotating swashplate 55 to tilt, thus varying the pitch of the blade 50 so that it takes one pitch at one point of its rotation and another at a different point of its rotation, so as to, for example, create greater downforce on food being processed in one part of the container 2 than in another, or to establish an upward flow of material in one place and a downward flow of material in another. Further, whilst a swashplate arrangement is used here, the pitch control rods 51 may be directly actuated by respective mechanical actuators 57 that co-rotate with the rotating shaft 53, thus allowing individual blade control. Where a protective casing is formed over the swashplate arrangement and control rod 51, the control rod 51 may connect instead to the pivot 52 inside the protective case, and the pivot 52 may extend through a sealing arrangement in the casing to connect with the blade 50 outside the casing.

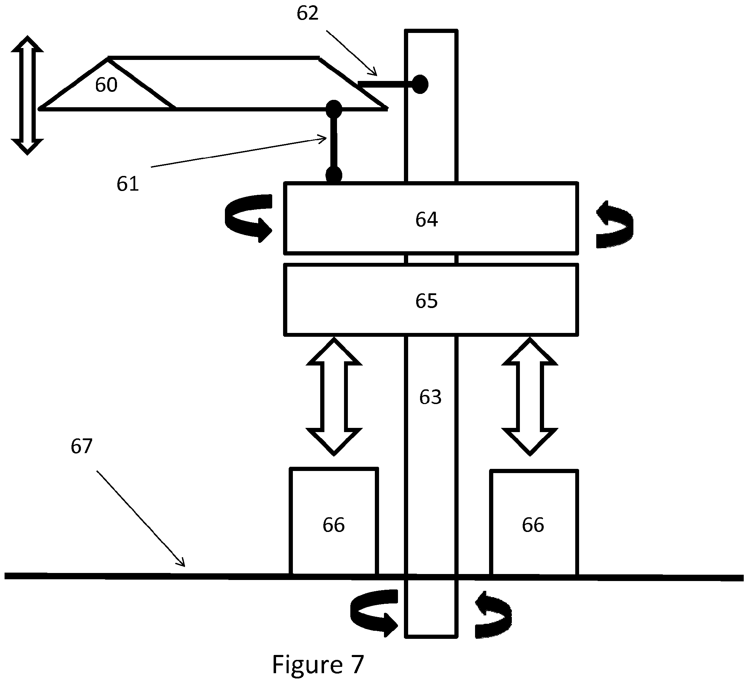

It is also desirable to provide rotary tools with varying tilt so as to disrupt standing vortexes and move the tools toward food matter co-rotating with the tools. Fig. 7 shows an embodiment in which the blade 60 is hingedly connected to the rotating shaft 63 so as to permit tilting of the blade 60. Blade 60 is hingedly connected to a tilt-control rod 61, which is hingedly connected to rotating swashplate 64, which contacts non-rotating swashplate 65. Non-rotating swashplate 65 is connected to mechanical actuators 66 which are supported by surface 67.

In operation non-rotating swashplate 65 is tilted by mechanical actuators 66 to a desired angle by raising one side of the non-rotating swashplate 65 and lowering the other side. This tilt is then communicated to rotating swashplate 64 through its contact with non-rotating swashplate 65, which drives the tilt-control rod 61 to push the blade 60 to tilt so as to conform to the tilt of the non-rotating swashplate 65, tilting upwardly along that part of its rotation corresponding to the raised part of the non-rotating swashplate 65, and downwardly along that part of its rotation corresponding to the lowered part of the non-rotating swashplate 65. Alternatively the mechanical actuators 66 may raise or lower the non-rotating swashplate 65 to tilt the blade 60 upwardly or downwardly throughout its rotation. To aid in the communication of tilt between non-rotating swashplate 65 and rotating swashplate 64, rotating swashplate 65 may be urged towards non-rotating swashplate 65 by a helical spring or other resilient element.

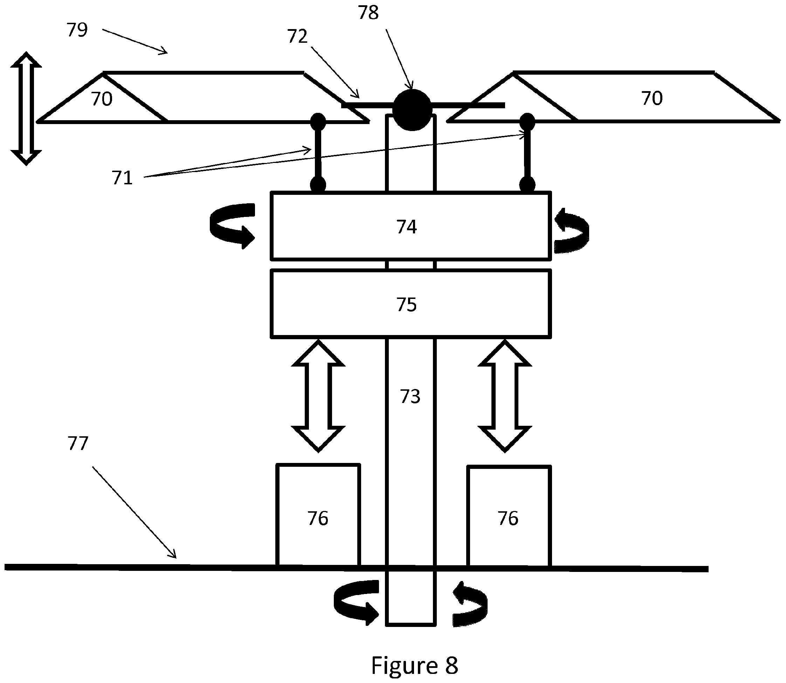

Whilst a hinged joint between the blade 60 and the rotating shaft 63 is used to achieve tilting of the blade 60 in the above example, other joints capable of achieving a tilting effect may also be used. These include universal joints and ball joints. An example of such an arrangement is shown in Fig. 8, where a rotary tool 79 having tool-elements 70 attached to a central ball-joint 78 by rigid connectors 72 is formed on the end of the rotating shaft 73 is used. The ball-joint 78 fixed to the end of the shaft 73 by a suitable connection (e.g., ball-and-socket connection, or the shaft 73 partially surrounding/encasing the bottom, sides, and top of ball-joint 78 so as to prevent its escape but still permit rotary movement) allowing movement within a given arc. The ball-joint 78 is constrained to rotate with the rotating shaft 73, and the tool-elements 70 of the rotary tool 79 are rigidly connected to the ball-joint 78 by connectors 73 so that the rotary tool 79 as a whole pivots about its ball joint 78. The tilt of the tool assembly 78 can be varied by actuators 76 on surface 77 driving the non-rotating swashplate 75 to assume a desired tilt, which is then communicated to rotating swashplate 74 which in turns pushes push-rods 71 (which may be telescoping within a limited range to give sufficient play for their task) to push the rotary tool 79 to assume a desired tilt. Whilst the rigid construction of rotary tool 79 prevents (absent additional actuation means and hinging of the tool elements) independent movement of tool elements 70, it is advantageous in that it creates a stronger, more simple and easier to manufacture structure.

Whilst tool pitch and tilt are varied using the above control mechanisms, hinged rotary tools driven by a shaft may be driven so as to vary their sweep (i.e., moved to incline forwards/backwards in the direction of rotation) by a similar actuator and push-rod arrangements to achieve a larger or smaller working area or bring the blades closer together or further away from each other.

To provide more than one variable geometry functionality at the same time (e.g., variable pitch and variable tilt) multiple swashplate arrangements may be arranged concentrically and the join between the blade and the shaft made fully-articulated. Whilst annular swashplates have been used for exemplary purposes here, the swashplates may be of different shapes including square. Either one of the non-rotating swashplate and the rotating swashplate may be replaced by a mechanical element such as e.g., smoothended pistons. The meeting point between the swashplates may be suitably lubricated to prevent wear, using, for example, suitable oils and/or ball bearings. The swashplates are preferably made of a hard-wearing material such as stainless steel.

It is desirable to provide an intelligent control system that can respond dynamically to conditions within a food processor to achieve desired food-processing outcomes by dynamically varying the geometry of the rotary tool, including by varying the flexibility of the shaft, the bending/flexing direction of the shaft, tool-pitch, and tool-tilt using any of the above-discussed control mechanisms. An example of such a control system is shown in Fig. 8.

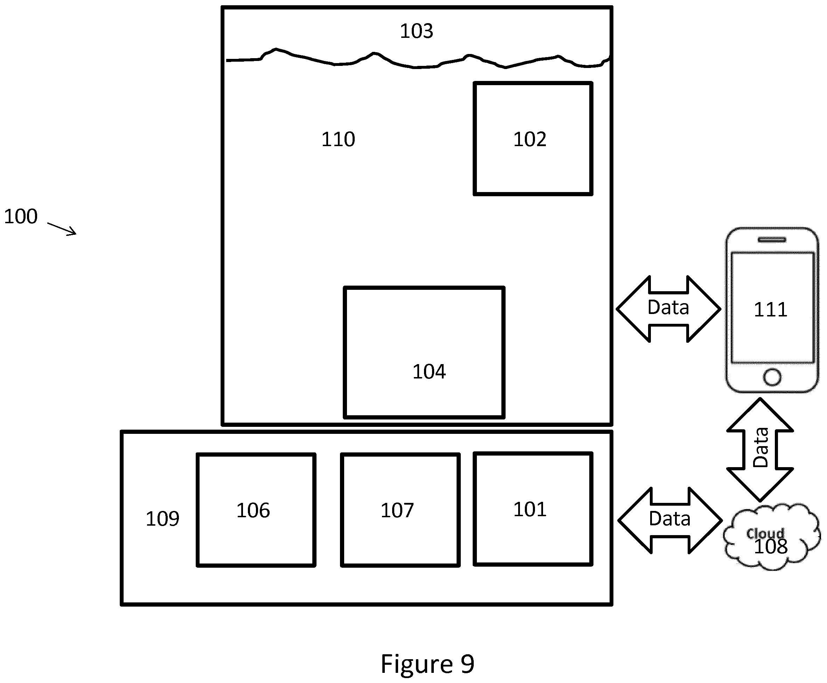

Fig. 9 shows a control system for automatically controlling an appliance 100 including a processor 101 which is in electronic communication with one or more sensors 102 which monitor conditions within a food processing container 103. Within the container 103 a rotary tool 104 is located for processing material to be processed 110 (i.e., a working medium such as a beverage or food). Variable geometry of the rotary tool 104 including at least one of shaft flexibility, tool-pitch, tool-tilt, bending/flexing direction is controlled by actuator 105, which is also in electronic communication with, and automatically controlled by, the processor 101. More than one actuator 105 may be present. A user interface 106 for allowing user-input and displaying feedback to the user (either remotely as in a mobile electronic device, or as a built-in user-interface) is also in electronic communication with the processor 101. Processor 101 communicates electronically with memory 107, from which it can load food-processing programs, food data, and sensor feedback processing logic, and in which it can store feedback received from the sensors 102. Processor 101 is also in electronic communication with cloud service 108 and mobile device 111 which provide additional database and/or processing support and to which it can transmit feedback data received from the sensors 102.

Processor 101, memory 107, and user interface 106 may be located in a base unit 109 to which the food processing container 103 is removably attachable. Alternatively one or more of these elements may be located in a mobile device 111 or in a cloud 109. In an additional alternative, one or more of these elements may be included in the food processing container 103, or may be a composite element with functionalities divided between the base unit 109 and the food processing container 103.

Whilst only the actuators 105 and rotary tool 104 are shown here for simplicity, processor 101 may also communicate electronically with and automatically control other food processing components such as are typically found in a food processing appliance. These include heaters for heating the food, lights, interlocks, attachment identification tags, the rotary drive of the rotary tool, gearing controls of the rotary tool, means for bodily moving (in addition to or instead of varying the geometry of) the rotary tool laterally, vertically, or longitudinally (e.g., in a stand-mixer appliance, motors for moving the head from which the tools depend either vertically or horizontally forwards/backwards or side-to-side), and other such means as are necessary to achieve desired food processing results.

The sensors 102 can include one or more thermometers, visual/IR-wavelength cameras, weight-sensors (these can be located around the base of the food processing container 103 to detect its current balance), rotary tool 104 position sensors, speed sensors detecting the rotational speed and/or direction of rotary tool 104 or a motor of the appliance, stress-gauges located within the rotary tool 104 to detect axial/rotational/radial strains on the tool 104 and its components, pressure-sensors, nutritional sensors, chemical sensors such as pH sensors, food density/viscosity sensors, sound sensors, and other known sensing means for detecting physical characteristics of the working medium 110 or rotary tool 104. Sensors 102 can be located within the food processing container 103, or where remote sensing is possible, outside it (either in the base unit 109, or in the mobile device 111, or in another location). Feedback from the sensors 102 is transmitted electronically to processor 101 where it is suitably processed - for example by performing image-recognition processing on information from a video camera to identify food shapes, locations, and types.

Once processed, the feedback data is then used by the processor 101 as an input to a food processing program running on the processor 101 which analyses whether the feedback data meets a desired food or tool condition that has either been input by the user using the user interface 106, or mobile device 111, or loaded from the memory 107, or downloaded from the cloud service 108. Where the desired condition is not met the food processing program generates instructions that the processor 101 transmits to actuator 105 in order to achieve the desired food/tool condition.

In an example process, where the user inputs instructions into the user interface 106 requesting high-speed blending at 35,000 RPM, and where strain-gauge feedback from the sensors 102 received by the processor 101 indicates that axial strain on the tool 104 (in this case a bladed tool) is beyond a maximum tolerance loaded from memory 107 (or mobile device 111, or cloud service 109), the processor 101 then instructs actuator 105 to reduce the angle of attack of the blades of tool 104. The angle of attack of the blades is then reduced until feedback data indicates that axial strain is back within tolerance. Alternatively, the rotary tool 104 may be moved bodily relative to the working medium instead of varying its geometry to e.g., move away from dense material which may cause axial stress.

In another example, where visual-feedback from the sensors 102 as processed by the processor 101 indicates that a standing vortex has formed within the food processing container 103, the processor then instructs the tool 104 to alter its tilt so as to dissipate the vortex. In a further example, visual data received from the sensors 102 as processed by the processor 101 indicates that a lump of food is either co-rotating with the tool 104 or stationary within the food processor container 103 and the processor 101 then causes the tool 104 to tilt (or move bodily) towards the lump to break it up.

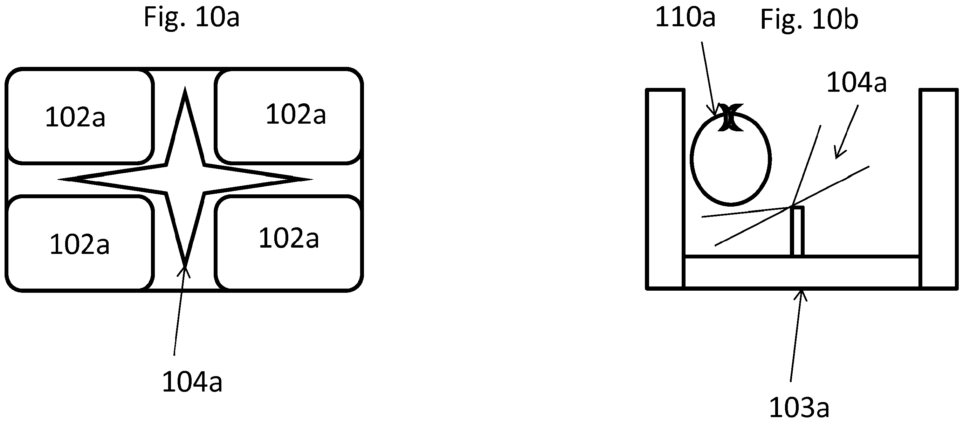

A detailed demonstration of this breaking up of lumps is shown in Figs. 10a and 10b, where a rotary tool 104a is located within a food processing container 103a, the base of which has multiple load-sensors 102a for detecting the load above them. These load sensors 102a may be pressure pads using e.g., force-sensitive resistors. When the load sensors 102a detect more load in a given location of the food container 103a (e.g., when food item 110a is located above one of the load sensors 102a), the rotary tool 104a is controlled to tilt towards that location. Once the load sensors detect an even load (within a given tolerance) processing may cease, or instead switch to a high-speed mode. Alternatively the load sensors 102a may be temperature sensors, with the rotary tool 104a responding similarly to an imbalance in temperature.

In yet another example of operation of the control system 100, the processor 101 receives instructions indicating a desired nutritional content and/or average food-particle size, configures the tool 104 to achieve this desired result by e.g. changing the angle-of-attack and/or rotational speed of the tool, causes processing to begin, and then continues processing until sensor data indicates that the desired result has been achieved.

In some circumstances the sensors 102 may be omitted. For example the processor 101 may directly vary the pitch of the blades of the tool 104 in response to instructions input by the user to process a user-identified substance at a desired speed into a user interface 106 in accordance with a known relationship stored on memory 107 (or alternatively mobile device 111 or cloud 109) between rotational speed, blade-pitch, and axial strain within the substance being processed (e.g., orange juice) so as to avoid the possibility of excessive strain. In another example, the processor 101 drives the actuator 105 to periodically vary the tilt of the tool 104 so as to pre-empt vortex formation. In a further example, the user may select a program (either directly, or by indicating that an amount of food of a given type is to be processed to achieve a desired result, for which a program is then generated) containing variations over time of rotary speed, tool-pitch, shaft-flexibility, tool-tilt, and other variations in geometry of the tool 104, for the processor 101 to execute.

A detailed example of such processing is as follows. A user inputs instructions into the user interface 106 indicating that 100 grams of unchopped carrot should be blended to a desired consistency. The user input is then processed by the processor 101, and instructions are a program of geometry variation instructions are generated based to safely achieve the desired result in the minimal possible time based on data retrieved from the memory 107 and/or the cloud service 108 relevant to the processing of carrot. An example process suitable for unchopped carrots would be an initial low rotational speed/high angle-of-attack (e.g., 120 RPM at 30 degrees) blending by blades of the rotary tool 104 for 30 seconds, followed by another 30 seconds of high rotational speed/low angle-of-attack blending (e.g., 35,000 RPM at 1 degree). The processor 101 then instructs the actuators 105 and the rotary drive to carry out the program.

Where either user-input into the user interface 106, or feedback from the sensors 102 are not recognised by the processor 101 based on the data stored on memory 107, the processor 101 may forward the information to the cloud service 108 and/or mobile device 111 for further processing. Assuming processing by the cloud service 108 and/or mobile device 111 is successful, suitable information and/or instructions which the processor 101 may then act on are forwarded to the processor 101 by the cloud service 108 and/or mobile device 111. Alternatively processing by the processor 101 and memory 107 can be omitted entirely and the food processing system 100 controlled directly by processing means of the cloud service 108 and/or mobile device 111.

Terms like "electronic communication", "data transmission" as used herein can include all forms of electronic communication including data-transmission and powering-on/off, digital or analogue, wireless or wired, or any suitable combination of these. This includes WiFi, Zigbee, Bluetooth, RFID, NFC, other radio-frequency transmission means, parallel or serial bus communication, and other communication means. Furthermore it includes data-transmission even where mediated partly or wholly through non-electronic forms including fibre-optic, laser, sonic, infra-red, mechanical etc.

Where one element of the invention disclosed herein is shown or described (either implicitly or explicitly) as being electronically inter-networked with others (i.e., connected to another element that is connected to one or more further elements), this should be read as including the possibility of communication of data and instructions between any one of the elements and any other of the elements with which it is inter-networked unless otherwise stated. Clouds, servers, processors, user interfaces, sensors, memories, routers, adapters, and other electronic elements should all be considered as including processors, and/or data-transmission/storage suitable for their described tasks.

The invention may take a form different to that specifically described above.

Where blending is used as an example of a food processing activity above, other food processing activities can be carried out including beating, whisking, mixing, folding, stirring etc. with suitable tools.

Where a bottom-driven food processing machine (e.g., a blender) is used as an example of providing variable geometry in a rotary tool, it may instead be implemented in a top-driven food processing machine (e.g., a stand-mixer or kitchen machine), or indeed in a machine where the rotary tool is initially oriented horizontally or at another angle. Whilst table-top domestic food processing machines have been used as an example implementation, the invention may also be implemented in a hand-held tool such as a hand-blender or hand-blender attachment. The term "kitchen appliance" encompasses all such devices.

Whilst the invention has been described in the field of domestic food processing and preparation machines, it can also be implemented in any field of use where efficient, effective and convenient preparation and/or processing of material is desired, either on an industrial scale and/or in small amounts. The field of use includes the preparation and/or processing of: chemicals; pharmaceuticals; paints; building materials; clothing materials; agricultural and/or veterinary feeds and/or treatments, including fertilisers, grain and other agricultural and/or veterinary products; oils; fuels; dyes; cosmetics; plastics; tars; finishes; waxes; varnishes; beverages; medical and/or biological research materials; solders; alloys; effluent; and/or other substances. Mechanical and other improvements disclosed herein may find application in automotive and industrial fields, the field of tools including hand-tools, the plumbing field, the field of hydraulics, and are not limited in application to kitchen appliances.

The invention described here may be used in any kitchen appliance and/or as a stand-alone device. This includes any domestic food-processing and/or preparation machine, including both top-driven machines (e.g., stand-mixers) and bottom-driven machines (e.g., food processors). It may be implemented in heated and/or cooled machines. The invention may also be implemented in both hand-held (e.g., hand blenders) and table-top (e.g., blenders) machines. It may be used in a machine that is built-in to a work-top or work surface, or in a stand-alone device. The invention can also be implemented as a stand-alone device, whether motor-driven or manually powered.

Further modifications will be apparent to those skilled in the art without departing from the scope of the present invention.

It will be understood that the invention has been described above purely by way of example, and modifications of detail can be made within the scope of the invention.

Each feature disclosed in the description, and (where appropriate) the claims and drawings may be provided independently or in any appropriate combination.

Reference numerals appearing in any claims are by way of illustration only and shall have no limiting effect on the scope of the claims.

## Claims

1. A variable-geometry tool assembly for a kitchen appliance, comprising a rotary tool with at least one tool element and an axle from which the tool derives rotary drive, and at least one of the rotary tool, the tool element, and the axle comprising a configuration the geometry of which is variable during use of the tool, and a control element arranged to act upon the variable geometry configuration during use of the tool to constrain the variable geometry.

2. The tool assembly of claim 1 wherein the axle comprises a flexing member, and the control element comprises a resilient element configured to bias the flexing member towards the axis of rotation, such as a helical spring surrounding the flexing member.

3. The tool assembly of claim 2, wherein the control element comprises an actuator for selectively either constraining the flexing member to rotate about the axis of rotation or permitting and/or driving flexing of flexing member away from the axis of rotation.

4. The tool assembly of claim 3, wherein the actuator comprises at least one of: a rigid element slidable axially along the flexing member to selectively constrain at least a portion of the flexing member,
a jacket arranged to surround the flexing element, or a rod arranged to slide axially in an internal cavity of the flexing member,
one or more inflatable element(s) located in an internal cavity defined axially through the flexing member, the inflatable element(s) being selectively inflatable and deflatable, and
at least one member formed of a smart material controllable to either permit, constrain, or drive flexing of the flexible member away from the axis of rotation, preferably wherein the smart material comprises at least one of an electro-active shape-memory alloy or an electro-active shape-memory polymer.

5. The tool assembly of claim 2, 3 or 4, wherein the flexing member comprises at least one of silicone, rubber, a helical spring, an articulated joint, a universal joint, or a ball-joint.

6. The tool assembly of claim 1 wherein at least one of the tilt, sweep, and pitch of the at least one tool element is variable relative to an axis of rotation of the axle, and the control element comprises at least one mechanical actuator.

7. The tool assembly of claim 6 comprising a drive arranged to communicate with the rotary tool and/or the at least one tool element to drive the mechanical actuator, the drive element being in mechanical communication with a rotating element co-rotating with the axle, such as a rotating swashplate, and the drive element comprises a non-rotating swashplate.

8. A kitchen appliance comprising the tool assembly of any one of claims 1-7.

9. The kitchen appliance of claim 8 comprising the tool assembly of any one of claims 3-7, further comprising a control system for controlling the tool assembly, the control system comprising a processor arranged to receive information, and to operate the control element to act upon the variable geometry configuration in response to the information.

10. A kitchen appliance as claimed in claim 9, comprising at least one sensor arranged to sense a physical characteristic of at least one of a working medium and the tool assembly, and wherein the processor is arranged to operate the control element in response to information from the at least one sensor.

11. A kitchen appliance as claimed in claim 9 or 10, comprising a user interface, wherein the processor is arranged to operate the control element in response to information received from the user interface.

12. A kitchen appliance as claimed in claim 11, wherein the appliance is arranged to communicate information to an external data source and the processor is in electronic communication with the external data source and is arranged to receive instructions from the external data source for operating the control element, and preferably comprising a data store arranged to contain information relating to characteristics of working media.

13. A control system for controlling a kitchen appliance comprising:
a processor,
a rotary tool arranged to act upon a working medium by bodily movement of the tool relative to the medium, the tool having a selectively variable geometry,
at least one sensor arranged to sense a physical characteristic of at least one of a working medium and the rotary tool,
wherein the processor is configured to;
generate instructions for at least one of causing bodily movement of the rotary tool relative to the working medium, or controlling the variation of the geometry of the rotary tool,
based on feedback from the at least one sensor, and
cause the instructions to be executed by the kitchen appliance.

14. The control system of claim 13, in which controlling the variation of the geometry of the tool comprises causing variation of the geometry, allowing variation of the geometry, or preventing variation of the geometry of the tool.

15. The control system of claim 13 or 14, in which the processor is at least one of a remote processor in electronic communication with the kitchen appliance, a mobile-device processor in electronic communication with the kitchen appliance, and/or is integral to the appliance.

16. A method for controlling a rotary tool assembly for a kitchen appliance, comprising steps of:
a. sensing a sensed physical characteristic of at least one of a working medium and a rotary tool performing processing on the working medium
b. automatically performing at least one of
i. bodily moving the rotary tool, and,
ii. controlling variation of the geometry of the rotary tool, based on the physical characteristic.

17. The method of claim 16, further comprising steps of:
c. receiving a desired physical characteristic
d. checking whether the sensed physical characteristic matches the desired physical characteristic and outputting a checking result
e. automatically performing at least one of:
i. bodily moving the rotary tool
ii. varying or controlling variation of the geometry of the rotary tool based on the checking result.

18. The method of claim 16 or 17 wherein the varying or controlling variation of the geometry of the rotary tool comprises at least one of: moving a rod in an internal cavity of a flexible element of the rotary tool, applying a stimulus to a smart material so as to permit, prevent, or drive flexing of a flexible element, controlling inflation of an inflatable element located in an internal cavity of a flexible element, and sliding a jacket along a flexible element of the rotary tool.

19. A kit of parts for constructing the tool assembly of any of claims 1-7, or for constructing the kitchen appliance of any of claims 8-12.
